# FASCICULE DE BREVET EUROPEEN

(11) **EP 2 204 765 B1**
(45) Date de publication et mention de la délivrance du brevet: **22.05.2019**
(21) Numéro de dépôt: 09180076.3
(22) Date de dépôt: 21.12.2009
(51) Int. Cl.: G06Q 20/32

(54) **DISPOSITIF PORTABLE PERMETTANT À UN INDIVIDU D'OBTENIR ET UTILISER UN TITRE DÉMATÉRIALISÉ**
TRAGBARE VORRICHTUNG, DIE ES EINER PERSON ERLAUBT, EINEN DEMATERIALISIERTEN GUTSCHEIN ZU ERHALTEN UND ZU VERWENDEN
PORTABLE DEVICE ALLOWING AN INDIVIDUAL TO OBTAIN AND USE A DEMATERIALISED VOUCHER

(30) Priorité: 31.12.2008 FR 0859158
(43) Date de publication de la demande: 07.07.2010
(73) Titulaire: IDEMIA France, 92700 Colombes (FR)
(72) Inventeur: Bertin, Marc, 78720 La Celle les Bordes (FR); Delolme, Pierrick, 75005 Paris (FR)
(74) Mandataire: Cougard, Jean-Marie

(56) Documents cités:
- EP-A- 1 132 839
- US-A1- 2007 145 132
- GERALD MADLMAYR ET AL: "Secure Communication between Web Browsers and NFC Targets by the Example of an e-Ticketing System" E-COMMERCE AND WEB TECHNOLOGIES; [LECTURE NOTES IN COMPUTER SCIENCE], SPRINGER BERLIN HEIDELBERG, BERLIN, HEIDELBERG, vol. 5183, 3 septembre 2008 (2008-09-03), pages 1-10, XP019103905 ISBN: 978-3-540-85716-7

## Description

### Arrière plan de l'invention

L'invention se situe dans le domaine général des transactions électroniques pouvant être effectuées, par un individu, à partir de d'un dispositif portable de cet individu, par exemple à partir de son téléphone mobile.

Plus précisément, l'invention vise un procédé permettant de dématérialiser les titres d'un individu, et un téléphone mobile mettant en oeuvre ce procédé, les titres dématérialisés étant d'utilisation beaucoup plus commode que les titres traditionnels sous forme papier de l'art antérieur.

Dans ce document, la notion de « titre » doit être interprétée au sens large. Elle vise tout type de document offrant un droit au moins temporaire à un individu, ce droit étant susceptible d'être vérifié par un tiers.

A titre d'exemple, un ticket-restaurant, un bon de réduction, un titre de paiement, et un document offrant un droit d'accès sont des titres au sens de l'invention.

L'invention vise plus particulièrement les applications dans lesquelles le titre dématérialisé est transmis, au moment de la transaction, à un terminal tiers, par une liaison courte distance. Or, dans ce genre d'applications, il est important que l'utilisateur soit rassuré, avant même l'établissement de la communication sur la validité du titre.

La Demanderesse s'est aperçue du fait qu'un élément rassurant, dans ce contexte, était de pouvoir présenter, à l'utilisateur du dispositif tiers, sur l'écran du téléphone mobile, un titre dématérialisé ayant l'apparence du titre matériel correspondant sous forme papier.

Or, les solutions de dématérialisation connues à ce jour n'offrent pas cette possibilité.

Le document EP 1132839 A (12-09-2001) divulgue une application de portefeuille électronique mise en oeuvre par un terminal portable et permettant d'acheter et d'utiliser des valeurs électroniques telles que des tickets et cartes prépayées.

### Objet et résumé de l'invention

L'invention est définie dans le jeu de revendications ci-joint.

L'invention vise un dispositif portable qui ne présente pas les inconvénients de l'art antérieur. Ce dispositif portable est défini dans la revendication 2.

L'image peut notamment être un logo de l'entreprise émettrice du titre, de sorte que le document de présentation affiché sur l'écran du dispositif portable ait l'apparence d'un titre émis par cette entreprise sous forme papier.

Cet affichage est de nature a rassurer l'utilisateur du dispositif portable mais aussi celui du dispositif tiers au moment où il approche son dispositif pour recevoir le titre par les moyens de communication courte portée.

Mais, de façon très avantageuse, seul le titre à proprement parler est transmis au dispositif tiers, à savoir les données directement pertinentes pour que ce dispositif tiers puisse vérifier la validité du titre, ce titre ayant été obtenu par le dispositif portable à partir des données sécurisées.

Dans ce document, la notion de « vérification d'une donnée » signifie d'une part authentifier l'émetteur de cette donnée et d'autre part garantir l'intégrité de cette donnée, par exemple en utilisant une technique de signature cryptographique.

L'invention offre donc un mécanisme à la fois très ergonomique et très sécurisé car même une manipulation frauduleuse de l'image, visant à tromper l'utilisateur du dispositif portable ou du dispositif tiers serait sans effet dommageable.

Par ailleurs, il est intéressant de constater que le volume de données échangées par le dispositif portable, d'une part pour recevoir les données nécessaires à l'obtention du titre et d'autre part nécessaire à l'utilisation du titre sont d'un volume limité, ces données ne comportant pas l'image précitée.

Dans un mode particulier de réalisation de l'invention, la deuxième mémoire non volatile est aussi une mémoire sécurisée, par exemple comprise dans une carte à microcircuit du dispositif portable. Cette caractéristique est importante lorsque l'on souhaite garantir l'intégrité de l'image en plus de celle du titre.

Dans un mode particulier de réalisation, le dispositif portable comporte des moyens de sélection de l'image dans ladite mémoire non volatile précitée, en fonction du titre avec lequel elle est combinée. Ce mode de réalisation est particulièrement avantageux quand le dispositif portable obtient et utilise différents types de titres, par exemple des tickets-restaurant, des billets d'avion, des bons de réduction, des titres d'accès à un bâtiment ...

Dans un mode particulier de réalisation, la première mémoire non volatile dans laquelle sont mémorisées les données sécurisées est une carte à microcircuit du dispositif portable, par exemple une carte SIM, une telle carte offrant un environnement fortement sécurisé permettant de protéger efficacement ces données contre toute attaque malveillante.

Dans un mode particulier de réalisation, les données sécurisées sont mises à disposition du dispositif portable par un dispositif appelé « dispositif émetteur de titres », le dispositif portable comportant des moyens d'obtention de ces données sécurisées et des moyens d'obtention d'un ou plusieurs titre(s) à partir de ces données sécurisées.

Dans certaines applications, le dispositif émetteur de titres peut envoyer des données sécurisées à plusieurs individus définissant un groupe.

De façon préférée, les données sécurisées obtenues par le dispositif portable selon l'invention sont constituées par une structure de données comportant des informations permettant à ce dispositif d'obtenir la liste des attributs des titres émis pour l'utilisateur de ce dispositif.

La structure de données peut comporter la liste des attributs des titres.

Dans un mode particulier de réalisation, un attribut d'un titre est un identifiant de ce titre.

Dans un mode de réalisation particulier, la liste des identifiants des titres devant être émis pour un individu est ordonnée. Dans ce cas, la structure de données peut avantageusement comporter le premier identifiant de la liste et le nombre d'identifiants dans la liste. On obtient ainsi une structure de données plus compacte, surtout si le nombre de titres est important.

Dans un mode de réalisation particulier, le dispositif émetteur de titres envoie la structure de données au dispositif portable via un réseau de télécommunications mobiles.

Dans un autre mode de réalisation, c'est le dispositif portable qui télécharge la structure de données, depuis un serveur Web géré par le dispositif émetteur de titres par exemple.

Dans un mode particulier de réalisation, le dispositif portable selon l'invention comporte des moyens de vérification des données sécurisées, ces moyens utilisant une clef cryptographique.

L'utilisation de cette clef permet de garantir que le dispositif portable selon l'invention est effectivement autorisé à obtenir les titres identifiés par cette structure.

En pratique, la clef cryptographique précitée est complémentaire d'une clef cryptographique utilisée par le dispositif émetteur de titres pour sécuriser la structure de données mise à disposition du dispositif portable.

Dans ce document, la notion de clef complémentaire doit être comprise au sens large. Il peut s'agir notamment d'une clef publique complémentaire d'une clef privée utilisée par le dispositif émetteur de titres pour signer la structure de données. Il peut aussi s'agir d'une clef identique à la clef du dispositif émetteur de titres lorsqu'un mécanisme de signature symétrique est utilisé.

Dans un mode préféré de réalisation de l'invention, chaque titre comporte un identifiant.

Pour certaines applications de l'invention, il n'est pas nécessaire que l'identifiant d'un titre soit unique. Par exemple lorsque le titre est un bon offrant une réduction sur un produit pendant une période donnée (offre exceptionnelle), le même identifiant peut être envoyé à plusieurs individus, la seule exigence étant que l'identifiant permette d'identifier cette offre.

Mais dans un mode de réalisation particulier de l'invention, l'identifiant d'un titre identifie ledit titre de façon unique. Ce mode de réalisation sera mis en oeuvre dès lors que l'on souhaite pouvoir différentier les titres. Ce sera notamment le cas si on utilise l'invention pour émettre des billets d'avion, les compagnies aériennes exigeant que chaque billet soit nominatif, autrement dit attribué à un individu particulier.

Dans un mode particulier de réalisation de l'invention, les moyens d'un terminal pour envoyer sans fil, à courte portée, un ou plusieurs titre(s) à un dispositif tiers, sont des moyens conformes à la norme NFC. De préférence, ces moyens seront réglés pour communiquer à une distance de moins de 50 centimètres, préférentiellement moins de 10cm.

On s'assure ainsi que seule un dispositif tiers placé à proximité du dispositif portable utilisateur est apte à recevoir le titre émis par ce dispositif portable. Ce mode de réalisation est particulièrement important lorsque le titre émis par le dispositif portable est associé à une valeur numéraire récupérable par le dispositif tiers, comme un titre de paiement par exemple.

L'invention propose aussi un mode de réalisation particulier qui permet de renforcer la sécurité du système de ce point de vue. Dans ce mode de réalisation, le dispositif portable comporte des moyens de sécurisation de la communication sans fil courte portée avec une deuxième clef cryptographique, le dispositif tiers utilisant une clef cryptographique complémentaire de la deuxième clef pour vérifier la validité dudit titre. Lorsque cette sécurité est mise en oeuvre, on peut permettre une plus grande distance entre le dispositif portable et le dispositif tiers, si bien que d'autres types de moyens de communication sans fil peuvent être utilisés, et notamment des moyens connus de type WiFi ou Bluetooth.

L'invention peut en particulier être utilisée dans une application de dématérialisation de titres émis pour l'ensemble des individus d'un groupe déterminé.

La gestion du groupe d'individus pour le dispositif émetteur de titres est particulièrement simple puisqu'il lui suffit de tenir à jour une liste des adresses des terminaux des individus du groupe.

Cette liste peut être communiquée de plusieurs façons au dispositif émetteur.

Dans un mode particulier de réalisation, une ou plusieurs entités sont aptes à commander l'émission des titres des individus d'un groupe auprès du dispositif émetteur de titres par l'envoi d'une commande comportant des informations suffisantes pour identifier ces individus.

La commande peut par exemple comporter la liste des individus, ou lorsque les individus d'un groupe sont connus du dispositif émetteur de titres, simplement l'identifiant du groupe.

La commande peut aussi comporter le nombre de titres à émettre pour chacun des individus.

Elle peut aussi comporter la date à laquelle les titres doivent être émis.

La commande peut aussi comporter les identifiants des terminaux des individus à qui le dispositif émetteur doit envoyer les structures de données concernées.

Dans un mode particulier de réalisation, l'entité précitée envoie la commande sur réception d'une commande émise par un dispositif client.

L'invention offre ainsi une grande souplesse.

L'invention peut en particulier être utilisée par une entreprise pour gérer les tickets-restaurant de son personnel en envoyant à la société émettrice de ces tickets une liste à jour du personnel de l'entreprise, et éventuellement les identifiants des terminaux de ces individus.

L'invention peut être utilisée dans des applications pour lesquelles un seul identifiant de titre est fourni à un dispositif portable, ce titre ayant au surplus une durée de vie très limitée, par exemple quelques secondes. Ce sera notamment le cas, lorsque le titre émis pour un individu est un titre donnant accès à un bâtiment sensible.

Dans un mode de réalisation particulier, l'identifiant d'un titre émis pour un individu permet d'identifier le groupe auquel appartient l'individu.

Cette caractéristique facilite énormément la gestion des titres après leur utilisation. Par exemple, dans le cas d'une application de dématérialisation des tickets-restaurant des employés d'une entreprise, il pourra être avantageux d'utiliser l'identifiant de l'entreprise en plus de celui de chacun des individus, l'identifiant de l'entreprise pouvant être utilisé par la société de restauration à des fins statistiques notamment.

Le dispositif tiers comporte des moyens de communication sans fil courte portée aptes à recevoir un ou plusieurs titres émis par un dispositif portable selon l'invention et des moyens de vérification de la validité de ce(s) titre(s).

Dans un mode particulier de réalisation, ce dispositif tiers comporte :
- des moyens pour mémoriser, dans une mémoire non volatile de ce dispositif, les attributs des titres reçus de ces terminaux ;
- des moyens pour envoyer, à une unité de collecte desdits titres, des données de déchargement représentant au moins un de ces attributs ; et
- des moyens pour supprimer ces attributs de cette mémoire non volatile.

D'une façon générale, l'entité de collecte est une entité chargée de récupérer les titres après leur utilisation par le dispositif portable de l'individu. Il peut s'agir, mais cela n'est pas obligatoire de l'entité qui a commandé l'émission des titres auprès du dispositif émetteur de titres.

La suppression des attributs des titres utilisés de la mémoire non volatile du dispositif tiers peut consister à effacer ces attributs de la mémoire, ou à enregistrer une information représentative du fait que les attributs one été envoyés à l'unité de collecte.

Pour certaines applications, il est important de sécuriser cette opération. A cet effet, le dispositif tiers comporte, dans un mode de réalisation particulier, des moyens pour sécuriser l'envoi des données de déchargement avec une troisième clef cryptographique, l'unité de collecte comportant des moyens pour vérifier la validité des données de déchargement, ces moyens utilisant une clef complémentaire de la troisième clef cryptographique.

Corrélativement, l'invention concerne un procédé d'obtention et d'utilisation d'un titre dans un dispositif portable selon la revendication 1.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1A représente une image et plus précisément une image de fond d'un ticket-restaurant ;
- la figure 1B représente un exemple de ticket-restaurant dématérialisé pouvant être utilisé dans un dispositif portable conforme à l'invention ;
- la figure 1C représente un document de présentation combinant un titre dématérialisé et une image de fond d'un ticket-restaurant ;
- la figure 2 représente de façon schématique une communication sans fil courte portée entre un dispositif portable conforme à l'invention et un dispositif tiers ;
- la figure 3 représente un scénario particulier de mise en oeuvre de l'invention ;
- les figures 3A, 3B et 3C représentent des exemples de fichiers utilisés dans le scénario de la figure 3 ;
- la figure 4A représente le dispositif émetteur de titres de la figure 3;
- les figures 4B et 4C représentent des commandes pouvant être échangées lors du scénario de la figure 3 ;
- la figure 4D est un exemple de structure de données sécurisées pouvant être créée par le dispositif émetteur de titres de la figure 4A ;
- la figure 5A représente un dispositif portable conforme à l'invention et la figure 5B une carte à microcircuit de ce dispositif ;
- la figure 6A représente en détails le dispositif tiers du scénario de la figure 3 et la figure 6B une carte à microcircuit de ce dispositif ;
- la figure 7 représente, sous forme d'organigramme, les principales étapes d'un procédé conforme à un mode particulier de réalisation de l'invention ; et
- la figure 8 représente une structure de données pouvant être utilisée dans l'invention.

### Description détaillée d'un mode de réalisation

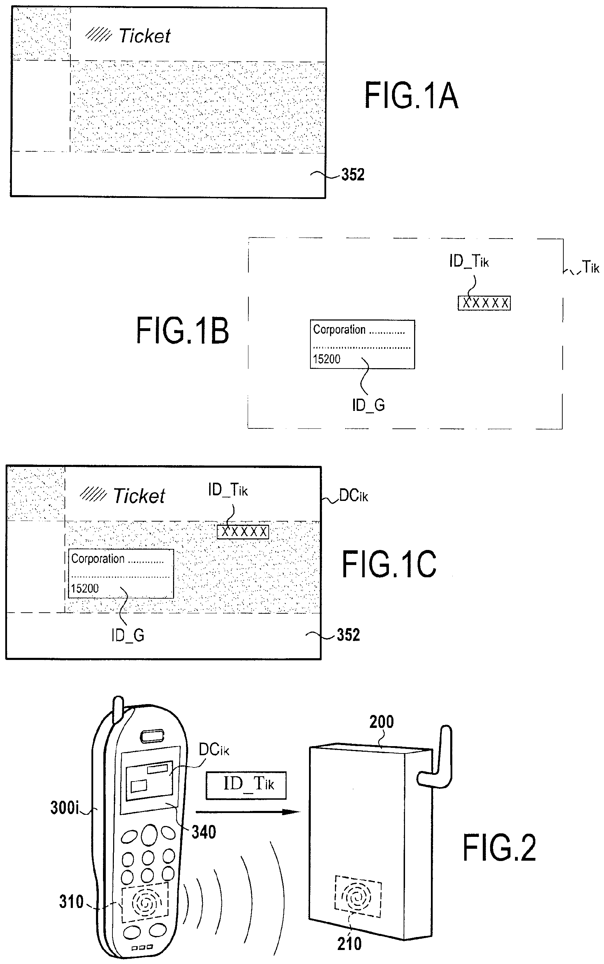

La **figure 1A** représente une image 352, cette image représentant le fond d'un ticket-restaurant avec le logo de la société émettrice.

La **figure 1B** représente un exemple de titre dématérialisé Tᵢₖ pouvant être utilisé dans un dispositif portable conforme à l'invention.

Dans l'exemple de réalisation décrit ici, le titre dématérialisé Tᵢₖ est un ticket-restaurant dématérialisé.

Plus précisément il s'agit du k^{ème} ticket-restaurant dématérialisé émis pour un individu Ii d'un groupe G.

Ce ticket Tᵢₖ comporte l'identifiant ID_G du groupe G et l'identifiant ID_Tᵢₖ de ce ticket, par exemple un numéro de série de ce ticket.

La **figure 1C** représente un document de présentation DCᵢₖ combinant le titre dématérialisé Tᵢₖ de la figure 1B avec l'image 352 de la figure 1A.

L'image 352 est choisie de sorte que le document de présentation DCiₖ dématérialisé ait l'apparence d'un ticket-restaurant réel, c'est-à-dire sous forme papier.

La **figure 2** représente de façon schématique une utilisation du ticket-restaurant dématérialisé Tᵢₖ conforme à l'invention.

Sur cette figure, on a représenté un dispositif portable 300ᵢ de l'individu Iᵢ (à savoir dans cet exemple un téléphone mobile) et un terminal de paiement 200.

Dans l'exemple de réalisation décrit ici, le dispositif portable 300ᵢ est un téléphone mobile. Il comporte un écran 340.

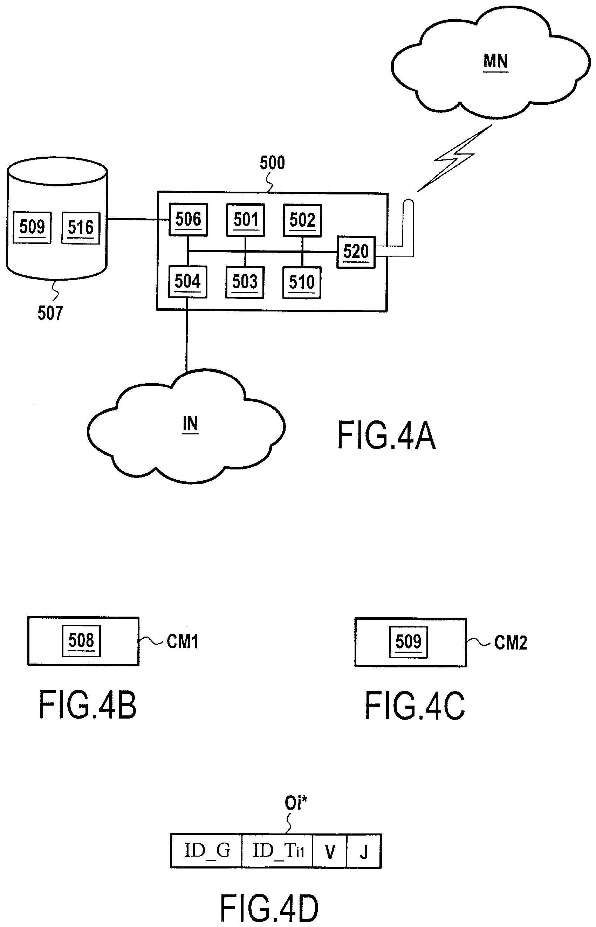

Le dispositif portable 300ᵢ est apte à obtenir le ticket-restaurant dématérialisé Tᵢₖ à partir d'une structure de données qui sera décrite ultérieurement en référence à la figure 4D.

Le terminal de paiement 200 est un dispositif tiers. Il s'agit par exemple du terminal de paiement d'un restaurant qui accepte les tickets-restaurant dématérialisés du type du ticket-restaurant Tᵢₖ.

Le dispositif portable 300ᵢ comporte des moyens 310 de communication sans fil courte portée pour communiquer avec des moyens 210 correspondants du terminal de paiement 200.

Dans le mode de réalisation décrit ici, les moyens 310 du dispositif portable 300 et 210 du terminal de paiement 200 sont des modules conformes à la norme NFC.

Dans le mode de réalisation décrit ici, lorsque l'utilisateur Iᵢ du téléphone mobile 300ᵢ souhaite utiliser un ticket-restaurant, il commande son téléphone mobile 300ᵢ pour qu'il crée un document de présentation DCᵢₖ en combinant le ticket dématérialisé Tᵢₖ avec l'image 352, ce document de présentation DCᵢₖ étant affiché sur l'écran 340 pour être présenté à l'utilisateur du terminal de paiement 200.

Si l'utilisateur du terminal de paiement 200 accepte le paiement de l'individu Iᵢ, il demande à l'utilisateur Iᵢ d'approcher son téléphone mobile 300ᵢ typiquement à quelques centimètres du terminal de paiement 200 de sorte que les moyens de communication sans fil 310 et 210 de ces appareils soient à portée l'un de l'autre.

L'identifiant ID_Tᵢₖ est alors transmis par le module NFC 310 du téléphone mobile 300ᵢ et reçu par le module NFC 210 du terminal de paiement 200.

L'image 352 n'est pas transmise.

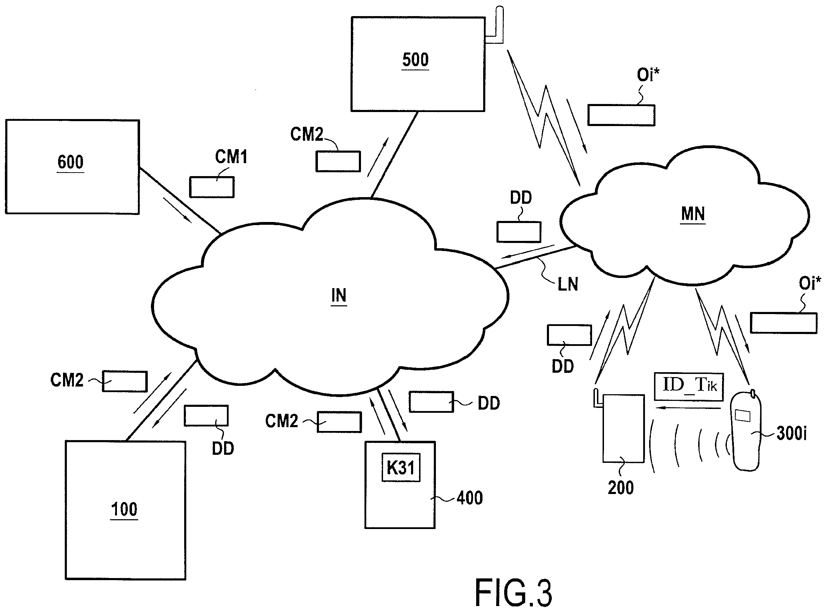

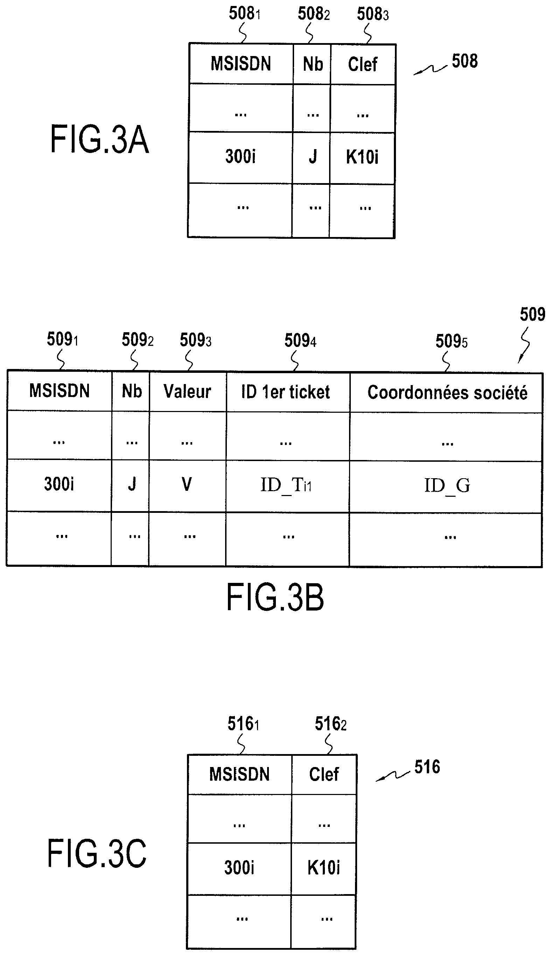

La **figure 3** représente un scénario particulier de mise en oeuvre de l'invention.

Dans le mode de réalisation décrit ici, le dispositif portable 300ᵢ est connecté à un réseau mobile MN.

Le réseau mobile MN est interconnecté à un réseau Internet IN par une liaison LN.

Sur cette figure on a référence Oᵢ* la structure de données utilisée par le dispositif portable 300ᵢ pour obtenir le ticket-restaurant Tᵢₖ.

Cette structure de données est sécurisée.

La structure de données sécurisée Oᵢ* est créée par un dispositif émetteur de titres (à savoir un dispositif émetteur de tickets-restaurant dématérialisés) référencé 500.

Un exemple de structure de données sécurisées Oi* sera décrit en référence à la figure 4D.

Le dispositif émetteur de titres 500 comporte des moyens de communication aptes à envoyer la structure de données sécurisées Oᵢ* au téléphone mobile 300ᵢ via le réseau mobile MN.

Dans le mode de réalisation décrit ici, le dispositif émetteur de titres 500 comporte aussi des moyens de communication sur le réseau Internet IN.

Dans l'exemple de réalisation décrit ici, le processus d'émission de titres est le suivant :
En premier lieu, un dispositif client 600 envoie une première commande CM1, via le réseau Internet IN, à destination d'un serveur 100, cette commande étant représentée à la figure 4B.

Typiquement, le dispositif client 600 peut être celui d'une entreprise G qui emploie un certain nombre d'individus Iᵢ.

Le serveur 100 est par exemple un serveur géré par une entreprise d'émission de titres matériels, par exemple une entreprise d'émission de tickets-restaurant sous forme papier.

Dans l'exemple de réalisation décrit ici, la première commande CM1 comporte essentiellement un fichier 508, qui dans l'exemple de réalisation décrit ici, comporte trois colonnes 508₁ à 508₃. Ce fichier 508 est représenté à la figure 3A.

La première colonne 508₁ comporte les identifiants des terminaux 300ᵢ du système selon l'invention. Par souci de simplification, les identifiants des terminaux 300ᵢ sont également référencés 300ᵢ. Dans l'exemple de réalisation décrit ici, les terminaux 300ᵢ sont des téléphones mobiles et leurs identifiants des numéros MSISDN.

La deuxième colonne 508₂ comporte le nombre J de tickets-restaurant devant être émis pour l'individu Iᵢ.

La troisième colonne 508₃ comporte la valeur numéraire V des tickets-restaurant devant être émis pour l'individu Iᵢ. On supposera que cette valeur est la même pour tous les tickets-restaurant dématérialisés d'une ligne du fichier 508.

En deuxième lieu, et sur réception de la commande CM1, le serveur 100 émet une commande CM2 vers le dispositif émetteur de titres 500. Cette commande CM2 est représentée à la figure 4C. Dans l'exemple de réalisation décrit ici, cette commande CM2 comporte essentiellement un fichier 509, qui comporte, dans l'exemple de réalisation décrit ici cinq colonnes 509₁ à 509₅ dans lesquelles :
- les trois premières colonnes 509₁ à 509₃ sont identiques aux trois colonnes 508₁ à 508₃ du fichier 508 ;
- la quatrième colonne 508₄ comporte l'identifiant ID_Tᵢ₁ du premier ticket-restaurant devant être émis pour l'individu Iᵢ utilisateur du terminal 300ᵢ ; et
- la cinquième colonne 508₅ comporte les coordonnées ID_G de la société G employeur de l'individu Iᵢ.

Ce fichier 509 est représenté à la figure 3B.

Dans le mode de réalisation décrit ici, le dispositif émetteur de titres 500 crée la structure de données sécurisée Oᵢ* sur réception de la commande CM2 émise par un serveur 100.

Comme déjà décrit en référence à la figure 2, le dispositif de paiement 200 est apte à recevoir l'identifiant ID_Tᵢₖ d'un ticket-restaurant dématérialisé Tᵢₖ par ses moyens de communication sans fil courte portée 210.

Dans le mode de réalisation décrit ici, le dispositif de paiement 200 comporte des moyens pour envoyer à un centre de collecte, les identifiants de titres ID_Tᵢₖ des tickets-restaurant dématérialisés, dans des données dîtes de déchargement DD.

Dans l'exemple de réalisation décrits ici, les centres de collecte sont les serveurs 100, 400 ayant émis les commandes CM2 pour déclencher la création des données sécurisées Oᵢ* par le dispositif émetteur de titres 500.

Dans le mode de réalisation décrit ici, le dispositif émet les données de déchargement DD sur le réseau mobile MN. Elles transitent via la liaison LN et via le réseau Internet IN pour atteindre un centre de collecte 100, 400.

La **figure 4A** représente le dispositif émetteur de titres de la figure 3.

Dans l'exemple de réalisation décrit ici, le dispositif émetteur de titres 500 à l'architecture matérielle d'un ordinateur.

Il comporte notamment un processeur 501, une mémoire vive 502 et une mémoire morte 503.

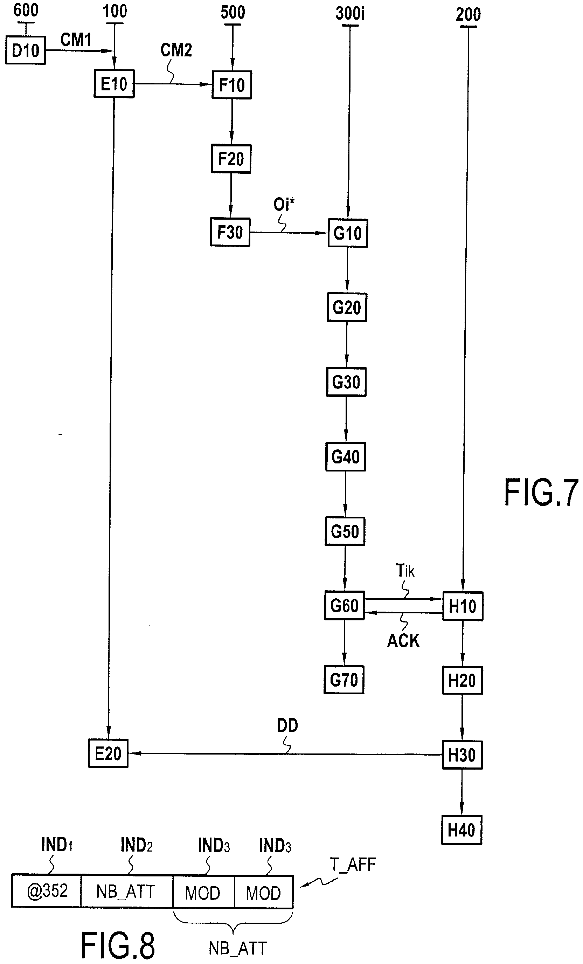

La mémoire morte 503 comporte un programme d'ordinateur comportant des instructions aptes à mettre en oeuvre les étapes E10 à E20 de l'organigramme de la figure 7 lorsqu'elles sont exécutées par le processeur 501.

Les variables nécessaires à l'exécution de ce programme sont mémorisées au besoin dans la mémoire vive 502.

Le dispositif émetteur de titres 500 communique sur le réseau mobile MN par des moyens de télécommunication sans fil 520 et sur le réseau Internet IN par des moyens de télécommunication filaires 504.

Dans le mode de réalisation décrit ici, le dispositif émetteur de titres 500 comporte des moyens 506 d'accès à une base de données 507.

Cette base de données 507 comporte un fichier 516 utilisé par le dispositif émetteur de titres 500 pour créer une structure de données Oᵢ.

Dans le mode de réalisation décrit ici, le dispositif émetteur de titres 500 comporte des moyens 510 pour sécuriser la structure de données Oᵢ, la structure de données sécurisée ainsi obtenue étant la structure de données sécurisée Oᵢ* introduite précédemment en référence à la figure 3.

La **figure 3C** représente le fichier 516 utilisé par le dispositif émetteur de titres 500 pour créer la structure de données Oᵢ.

Dans l'exemple de réalisation décrit ici, ce fichier comporte deux colonnes 516₁ et 516₂.

La première colonne 516₁ est identique à la première colonne 508₁ du fichier 508 ; elle comporte les identifiants des terminaux 300ᵢ du système selon l'invention, à savoir, dans l'exemple de réalisation décrit ici, les numéros MSISDN de ces terminaux.

La deuxième colonne 516₂ comporte une clef cryptographique K10ᵢ utilisée par les moyens 510 de sécurisation du dispositif émetteur de titres 500 pour sécuriser les structures de données envoyées vers le dispositif portable 300ᵢ.

Dans l'exemple de réalisation décrit ici, le dispositif émetteur de titres 500 créé la structure de données sécurisée Oᵢ* sur réception, via le réseau Internet IN, de la commande CM2 émise par le serveur 100 cette commande comportant le fichier 509, déjà décrit en référence à la figure 3B.

La **figure 4D** représente la structure de données sécurisées Oi* créée par le dispositif émetteur de titres 500.

Cette structure de données sécurisée est obtenue par les moyens de sécurisation 510 en cryptant, avec la clef cryptographique K10ᵢ, une trame comportant :
- les coordonnées ID_G de la société G employeur de l'individu Iᵢ ;
- l'identifiant ID_Tᵢ₁ du premier ticket-restaurant devant être émis pour l'individu Iᵢ ;
- la valeur numéraire V ; et
- le nombre J de tickets-restaurant.

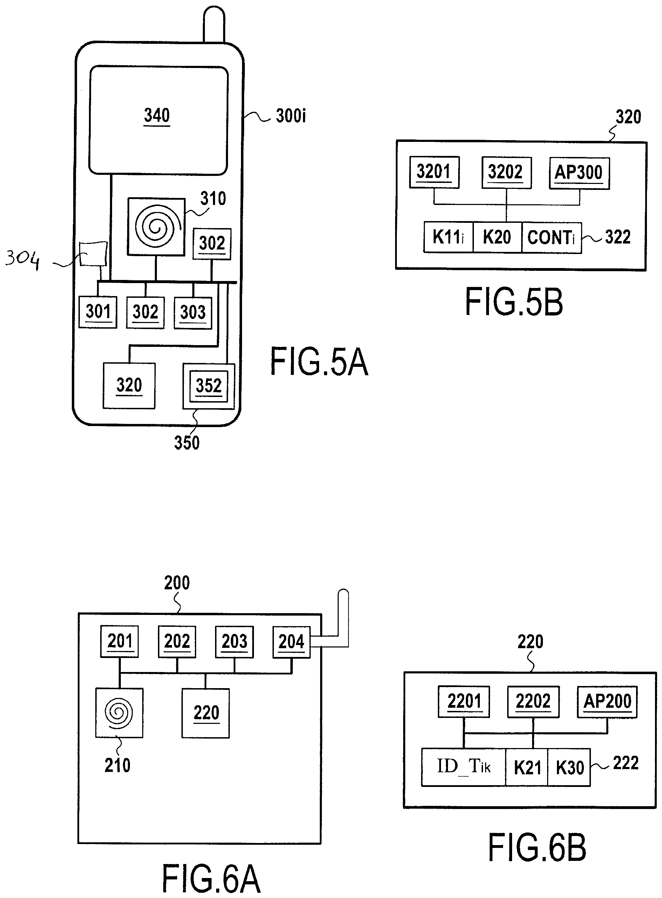

La **figure 5A** représente le dispositif portable 300ᵢ.

Dans l'exemple de réalisation décrit ici, le dispositif portable 300ᵢ à l'architecture matérielle d'un ordinateur.

Il comporte notamment un processeur 301, une mémoire vive 302, une mémoire morte 303, un module 304 de communication sur le réseau mobile MN, l'écran 340 déjà décrit et le module NFC 310 déjà décrit.

La mémoire morte 303 comporte un programme d'ordinateur comportant des instructions aptes à mettre en oeuvre les étapes G10, G40, G50, G60 de l'organigramme de la figure 7 lorsqu'elles sont exécutées par le processeur 301.

Les variables nécessaires à l'exécution de ce programme sont mémorisées au besoin dans la mémoire vive 302.

Dans le mode de réalisation décrit ici, le dispositif portable 300ᵢ comporte une mémoire non volatile réinscriptible mémorisant l'image 352.

Le dispositif portable 300ᵢ comporte une carte à microcircuit 320 (carte SIM) qui va maintenant être décrite en référence à la **figure 5B**.

Cette carte à microcircuit comporte un processeur 3201, une mémoire vive 3202 et une application logicielle AP300 apte à mettre en oeuvre les étapes G20, G30 de l'organigramme de la figure 7 lorsqu'elle exécutée par le processeur 3201.

Les variables nécessaires à l'exécution de l'application AP300 sont mémorisées au besoin dans la mémoire vive 3202.

La carte à microcircuit 320 comporte une mémoire non volatile réinscriptible 322 comportant :
- une clef cryptographique K11ᵢ complémentaire de la clef cryptographique (K10i) utilisée par le dispositif émetteur de titres 500 pour sécuriser la structure de données Oᵢ*. L'application AP300 utilise la clef cryptographique K11ᵢ pour vérifier la validité de la structure de données sécurisées Oᵢ* reçue du dispositif émetteur de titres 500 ;
- une deuxième clef cryptographique K20 utilisée par l'application AP300 pour sécuriser la communication sans fil courte portée avec le terminal de paiement 200 ; et
- une structure de données CONTᵢ permettant, à l'application AP300 de déterminer les identifiants ID_Tᵢₖ des titres émis par le dispositif 500 émetteur de titres pour le dispositif portable 300ᵢ et non encore utilisés.

La **figure 6A** représente le terminal de paiement 200.

Dans l'exemple de réalisation décrit ici, le terminal de paiement 200 à l'architecture matérielle d'un ordinateur.

Il comporte notamment un processeur 201, une mémoire vive 202 une mémoire morte 203, un module 204 de communication sur le réseau mobile MN, et le module NFC 210 déjà décrit.

La mémoire morte 203 comporte un programme d'ordinateur comportant des instructions aptes à mettre en oeuvre les étapes H10 et H20 de l'organigramme de la figure 7 lorsqu'elles sont exécutées par le processeur 201.

Les variables nécessaires à l'exécution de ce programme sont mémorisées au besoin dans la mémoire vive 202.

Dans le mode de réalisation décrit ici, le terminal de paiement 200 comporte une carte à microcircuit 220 qui va maintenant être décrite en référence à la **figure 6B****.**

Cette carte à microcircuit comporte un processeur 2201, une mémoire vive 2202 et une application logicielle AP200 apte à mettre en oeuvre les étapes H30 et H40 de l'organigramme de la figure 7 lorsqu'elle exécutée par le processeur 2201.

Les variables nécessaires à l'exécution de l'application AP200 sont mémorisées au besoin dans la mémoire vive 2202.

La carte à microcircuit 220 comporte une mémoire non volatile réinscriptible 222 comportant :
- une clef cryptographique K21 complémentaire de la clef cryptographique K20 utilisée par l'application AP300 du dispositif portable 300ᵢ pour sécuriser la communication sans fil courte portée entre les modules NFC 210, 310 ;
- les identifiants ID_Tᵢₖ de tickets-restaurant Tᵢₖ reçus par le module NFC 210 suite au paiement d'un repas ; et
- une clef cryptographique K30 pour sécuriser l'envoi de données de déchargement DD.

La **figure 7** représente sous forme d'organigramme, les principales étapes d'un procédé conforme à un mode particulier de réalisation de l'invention.

Au cours d'une étape D10, le dispositif client 600 envoie la commande CM1 déjà décrite au serveur 100.

Au cours d'une étape E10, le serveur 100 envoie au dispositif émetteur de titres 500 la commande CM2 déjà décrite, comportant des instructions suffisantes que le dispositif émetteur de titres 500 puisse identifier les individus Iᵢ et les caractéristiques de titres Tᵢₖ à émettre pour ces individus.

Cette commande CM2 est reçue par les moyens de communication 504 du dispositif émetteur de titres 500 au cours d'une étape F10.

Dans l'exemple de réalisation décrit ici, le dispositif émetteur de titres 500 crée, pour chaque individu Iᵢ, la structure de données Oᵢ comportant des informations permettant d'obtenir la liste des identifiants des titres émis pour cet individu.

Au cours de cette même étape F20, le dispositif émetteur de titre 500 sécurise la structure de données Oᵢ avec la clé cryptographique K10ᵢ associée à l'individu Iᵢ, obtenue dans le fichier 516.

La structure de données sécurisées Oᵢ* est envoyée par le dispositif émetteur de titres 500 au téléphone mobile 300ᵢ de l'individu Iᵢ au cours d'une étape F30.

Cette structure de données sécurisées Oᵢ* est reçue par le téléphone mobile 300ᵢ au cours d'une étape G10.

Au cours d'une étape G20, l'application AP300 du téléphone mobile 300ᵢ vérifie la validité de la structure de données Oᵢ* reçue à l'étape précédente en utilisant la clef K11ᵢ. Dans l'exemple de réalisation décrit ici, cette vérification consiste d'une part à authentifier le dispositif 500 émetteur de la structure de données sécurisée Oᵢ* et d'autre part à vérifier l'intégrité de cette structure de données.

Lorsque le résultat de cette étape de vérification est positif, le téléphone mobile 300ᵢ mémorise, dans une mémoire non volatile réinscriptible, des informations CONTᵢ permettant de déterminer les titres émis pour ce téléphone mobile.

Comme nous le verrons ultérieurement, lorsque l'utilisateur du téléphone mobile 300ᵢ utilise un titre, l'identifiant de ce titre est supprimé des informations CONTᵢ, ces informations CONTᵢ étant obtenues à partir de la structure de données sécurisée Oᵢ*.

Dans le mode de réalisation décrit ici, les informations CONTᵢ sont constituées par la liste des structures de données sécurisées Oᵢ*reçues par le terminal mobile 300ᵢ.

En variante, les informations CONTᵢ peuvent être constituées par une table dont chaque ligne regroupe les paramètres d'un titre (identifiant, valeur V, coordonnées ID_G de la société émettrice du titre, ...).

Lorsque l'utilisateur du terminal mobile 300ᵢ utilise un titre, l'identifiant de ce titre est supprimé des informations CONTᵢ.

Dans le mode de réalisation décrit ici, les J titres d'une structure de données sécurisée Oᵢ* sont utilisés par le terminal mobile 300ᵢ selon l'ordre décroissant de leurs identifiants ID_T_{iJ}, ID_T_{iJ-1}, ... ID_Tᵢ₁ et la suppression d'un titre de la liste CONTᵢ consiste à décrémenter la valeur J d'une unité de sorte que cette valeur J, J-1, ..., 1, 0 représente en permanence le nombre de titres non utilisés de la structure de données Oᵢ* et l'indice du prochain titre pouvant être utilisé dans cette structure.

Nous supposerons maintenant que l'utilisateur du téléphone mobile 300ᵢ souhaite utiliser un titre.

Dans l'exemple de réalisation décrit ici, il utilise alors, au cours d'une étape G30, l'application AP₃₀₀ mémorisée dans la carte à microcircuit de son téléphone mobile pour lire la valeur J de la structure de données Oi* et sélectionner les attributs du titre d'identifiant ID_T_{iJ}, à savoir, dans cet exemple, l'identifiant du titre, les coordonnées de la société émettrice de ce titre et l'identifiant du groupe auquel l'appartient l'utilisateur Iᵢ.

Cette sélection peut par exemple être effectuée en utilisant le clavier ou une souris du terminal mobile 300ᵢ.

Au cours d'une étape G40, le processeur 301 du téléphone mobile 300ᵢ combine ces informations de titre avec une image 352 pour créer un document de présentation.

Dans l'exemple de réalisation décrit ici, cette combinaison est effectuée en fonction d'indications stockées dans une structure de données T_AFF mémorisée dans la carte à microcircuit 320 du terminal mobile 300ᵢ.

La structure de données T_AFF utilisée dans le mode de réalisation décrit ici est représentée à la **figure 8**. Elle comporte :
- une indication IND1 indiquant l'adresse de l'image 352 dans la mémoire non volatile 350 du terminal mobile 300ᵢ ;
- une indication IND2 du nombre d'attributs (identifiant, valeur V, coordonnées ID_G de la société émettrice du titre, ...) à afficher ; et, pour chacun de ces attributs ;
- une indication IND3 spécifiant les modalités d'affichage de cet attribut (police, couleur, position dans l'image 352, ...).

Ce document de présentation est affiché sur l'écran du téléphone mobile 300ᵢ au cours d'une étape G50, de sorte qu'il peut être vu par l'utilisateur d'un terminal de paiement 200, par exemple le commerçant ou le restaurateur.

Si les deux utilisateurs sont d'accord pour effectuer la transaction, l'utilisateur Iᵢ du terminal mobile 300i approche son terminal mobile 300ᵢ du terminal de paiement 200, et autorise, via un menu de l'interface homme-machine de son terminal, l'établissement d'une communication sans fil courte portée entre ces équipements.

Au cours d'une étape G60, le terminal mobile 300ᵢ envoie alors l'identifiant Tᵢₖ du titre, la valeur V de ce titre et l'identifiant ID_G, au dispositif de paiement 200 qui répond par un acquittement ACK.

Dans l'exemple de réalisation décrit ici, cette communication est sécurisée par les clefs K20 du téléphone mobile 300ᵢ et K30 du dispositif de paiement 200.

L'application AP300 du téléphone mobile 300ᵢ peut alors, au cours d'une étape G70, mettre à jour les informations CONTᵢ pour refléter le fait que le titre Tᵢₖ a été utilisé. Dans l'exemple de réalisation décrit ici, cela revient à décrémenter la valeur J de la structure de données Oᵢ* d'une unité. Lorsque la valeur J atteint 0, la structure de données sécurisée Oᵢ* peut être supprimée de la structure CONTᵢ.

L'étape H10 de réception du titre Tᵢₖ par le dispositif de paiement 200 est suivie par une étape H20 au cours de laquelle ce dispositif stocke l'identifiant Tᵢₖ dans une mémoire non volatile réinscriptible 222 de ce dispositif.

Nous supposerons ensuite que l'utilisateur du dispositif de paiement 200 souhaite décharger les identifiants des titres mémorisés dans sa mémoire non volatile réinscriptible 222.

Dans l'exemple de réalisation décrit ici, le dispositif de paiement 200 envoie, au cours d'une étape H30, des données de déchargement DD comportant ces identifiants au serveur 100, cet envoi étant sécurisé par la clef cryptographique K30.

Les données de déchargement DD sont reçues par le serveur 100 au cours d'une étape E20.

L'application AP200 du dispositif de paiement 200 peut alors, au cours d'une étape H40, effacer les identifiants des titres déchargés de sa mémoire non volatile réinscriptible 222.

## Revendications

1. Procédé d'obtention et d'utilisation d'un titre (Tᵢₖ) dans un dispositif portable (300ᵢ) comportant:
- une étape de réception de données sécurisées (Oᵢ*) depuis un dispositif émetteur de titres (500) ;
- une étape de mémorisation, dans une première mémoire non volatile sécurisée (322) dudit dispositif portable (300ᵢ), d'au moins un titre (Tᵢₖ) obtenu à partir desdites données ;
- une étape de sélection d'au moins un titre (Tᵢₖ) dans ladite première mémoire (322);
- une étape pour combiner, dans un document de présentation (DCᵢₖ), ledit au moins un titre (Tᵢₖ) avec une image (352) mémorisée dans une deuxième mémoire non volatile (350) dudit dispositif portable (300i),
- une étape d'affichage dudit document de présentation (DCᵢₖ) sur un écran (340) dudit dispositif portable (300ᵢ); et
- une étape d'envoi dudit titre (Tᵢₖ) à un dispositif tiers (200), par des moyens (310) de communication sans fil courte portée, à partir de ladite première mémoire (322), ladite image (352) n'étant pas transmise ;
le procédé étant **caractérisé en ce que** dans lesdites données sécurisées (Oᵢ*) reçues du dispositif émetteur de titres (500) ne comportent pas ladite image (352).

2. Dispositif portable (300i) comportant :
- des moyens (304) de réception de données sécurisées (Oᵢ*) depuis un dispositif émetteur de titres (500) ;
- des moyens (AP300) de mémorisation, dans une première mémoire non volatile sécurisée (322) dudit dispositif portable (300ᵢ), d'au moins un titre (Tᵢₖ) obtenu à partir desdites données ;
- des moyens (AP300) de sélection d'au moins un titre (Tᵢₖ) dans ladite première mémoire (322);
- des moyens (301) pour combiner, dans un document de présentation (DCᵢₖ), ledit au moins un titre (Tᵢₖ) avec une image (352) mémorisée dans une deuxième mémoire non volatile (350) dudit dispositif portable (300i),
- des moyens (301) d'affichage dudit document de présentation (DCᵢₖ) sur un écran (340) dudit dispositif portable (300ᵢ) ; et
- des moyens (310) de communication sans fil courte portée aptes à envoyer ledit titre (Tᵢₖ) à un dispositif tiers (200), à partir de ladite première mémoire (322), ladite image (352) n'étant pas transmise,
le dispositif portable étant **caractérisé en ce que** lesdites données sécurisées (Oᵢ*), que les moyens (304) de réception sont configurées pour recevoir depuis le dispositif émetteur de titres (500), ne comportent pas ladite image (352) ;

3. Dispositif portable selon la revendication 2 comportant des moyens (301) de sélection de ladite image (352) dans ladite deuxième mémoire (350), en fonction dudit titre (Tᵢₖ).

4. Dispositif portable selon la revendication 2 ou 3, **caractérisé en ce que** ladite première mémoire non volatile (322) est comprise dans une carte à microcircuit (320) dudit dispositif portable.

5. Dispositif portable selon la revendication 4, **caractérisé en ce qu'**il comporte des moyens (AP300) de vérification desdites données sécurisées (Oᵢ*), ces moyens utilisant une clef cryptographique (K11ᵢ).

6. Dispositif portable selon l'une quelconque des revendications 2 à 5 **caractérisé en ce que** ladite deuxième mémoire non volatile (350) est une mémoire sécurisée.

7. Dispositif portable selon la revendication 6, **caractérisé en ce que** ladite deuxième mémoire non volatile (350) est comprise dans une carte à microcircuit (320) dudit dispositif portable.

8. Dispositif portable selon l'une quelconque des revendications 2 à 7, **caractérisé en ce que** ledit titre (Tᵢₖ) comporte un identifiant unique.

9. Dispositif portable selon l'une quelconque des revendications 2 à 8, **caractérisé en ce que** les moyens sans fil courte portée (310) sont conformes à la norme NFC.

10. Dispositif portable selon l'une quelconque des revendications 2 à 9, **caractérisé en ce qu'**il comporte des moyens (AP300) de sécurisation de la communication sans fil courte portée avec une deuxième clef cryptographique (K20ᵢ).

11. Dispositif portable selon la revendication 10, **caractérisé en ce que** lesdits moyens de sécurisation de la communication sans fil courte portée sont compris dans une carte à microcircuit (320) dudit dispositif portable (300ᵢ).

12. Dispositif portable selon l'une quelconque des revendications 2 à 10, **caractérisé en ce que** ledit titre (Tᵢₖ) est un ticket-restaurant.

## Patentansprüche

1. Verfahren zum Erhalten und Verwenden eines Titels (Tᵢₖ) in einer tragbaren Vorrichtung (300ᵢ), umfassend:
- einen Schritt des Empfangens gesicherter Daten (Oᵢ*) von einer Titelausgabevorrichtung (500),
- einen Schritt des Speicherns mindestens eines Titels (Tᵢₖ), der aus den Daten erhalten wird, in einem ersten nichtflüchtigen gesicherten Speicher (322) der tragbaren Vorrichtung (300ᵢ),
- einen Schritt des Auswählens mindestens eines Titels (Tᵢₖ) in dem ersten Speicher (322),
- einen Schritt des Kombinierens des mindestens einen Titels (Tᵢₖ) mit einem in einem zweiten nichtflüchtigen Speicher (350) der tragbaren Vorrichtung (300ᵢ) gespeicherten Bild (352) in einem Vorlagedokument (DCᵢₖ),
- einen Schritt des Anzeigens des Vorlagedokuments (DCᵢₖ) auf einem Bildschirm (340) der tragbaren Vorrichtung (300ᵢ), und
- einen Schritt des Sendens des Titels (Tᵢₖ) an eine Drittvorrichtung (200) unter Verwendung drahtloser Kommunikationsmittel (310) kurzer Reichweite ausgehend von dem ersten Speicher (322), wobei das Bild (352) nicht übertragen wird,
wobei das Verfahren **dadurch gekennzeichnet ist, dass** die von der Titelausgabevorrichtung (500) empfangenen gesicherten Daten (Oᵢ*) das Bild (352) nicht umfassen.

2. Tragbare Vorrichtung (300ᵢ), umfassend:
- Mittel (304) zum Empfangen gesicherter Daten (Oᵢ*) von einer Titelausgabevorrichtung (500),
- Mittel (AP300) zum Speichern mindestens eines Titels (Tᵢₖ), der aus den Daten erhalten wird, in einem ersten nichtflüchtigen gesicherten Speicher (322) der tragbaren Vorrichtung (300ᵢ),
- Mittel (AP300) zum Auswählen mindestens eines Titels (Tᵢₖ) in dem ersten Speicher (322),
- Mittel (301) zum Kombinieren des mindestens einen Titels (Tᵢₖ) mit einem in einem zweiten nichtflüchtigen Speicher (350) der tragbaren Vorrichtung (300ᵢ) gespeicherten Bild (352) in einem Vorlagedokument (DCᵢₖ),
- Mittel (301) zum Anzeigen des Vorlagedokuments (DCᵢₖ) auf einem Bildschirm (340) der tragbaren Vorrichtung (300ᵢ), und
- drahtlose Kommunikationsmittel (310) kurzer Reichweite, die dazu geeignet sind, den Titel (Tᵢₖ) an eine Drittvorrichtung (200) ausgehend von dem ersten Speicher (322) zu senden, wobei das Bild (352) nicht übertragen wird,
wobei die tragbare Vorrichtung **dadurch gekennzeichnet ist, dass** die gesicherten Daten (Oᵢ*), zu deren Empfang von der Titelausgabevorrichtung (500) die Empfangsmittel (304) ausgestaltet sind, das Bild (352) nicht umfassen.

3. Tragbare Vorrichtung nach Anspruch 2, umfassend Mittel (301) zum Auswählen des Bildes (352) in dem zweiten Speicher (350) in Abhängigkeit des Titels (Tᵢₖ).

4. Tragbare Vorrichtung nach Anspruch 2 oder 3, **dadurch gekennzeichnet, dass** der erste nichtflüchtige Speicher (322) in einer Mikrochipkarte (320) der tragbaren Vorrichtung enthalten ist.

5. Tragbare Vorrichtung nach Anspruch 4, **dadurch gekennzeichnet, dass** sie Mittel (AP300) zum Verifizieren der gesicherten Daten (Oᵢ*) umfasst, wobei die Mittel einen kryptografischen Schlüssel (K11ᵢ) verwenden.

6. Tragbare Vorrichtung nach einem der Ansprüche 2 bis 5, **dadurch gekennzeichnet, dass** der zweite nichtflüchtige Speicher (350) ein gesicherter Speicher ist.

7. Tragbare Vorrichtung nach Anspruch 6, **dadurch gekennzeichnet, dass** der zweite nichtflüchtige Speicher (350) in einer Mikrochipkarte (320) der tragbaren Vorrichtung enthalten ist.

8. Tragbare Vorrichtung nach einem der Ansprüche 2 bis 7, **dadurch gekennzeichnet, dass** der Titel (Tᵢₖ) eine eindeutige Kennung umfasst.

9. Tragbare Vorrichtung nach einem der Ansprüche 2 bis 8, **dadurch gekennzeichnet, dass** die drahtlosen Mittel (310) kurzer Reichweite dem NFC-Standard entsprechen.

10. Tragbare Vorrichtung nach einem der Ansprüche 2 bis 9, **dadurch gekennzeichnet, dass** sie Mittel (AP300) zum Sichern der drahtlosen Kommunikation kurzer Reichweite mit einem zweiten kryptografischen Schlüssel (K20ᵢ) umfasst.

11. Tragbare Vorrichtung nach Anspruch 10, **dadurch gekennzeichnet, dass** die Mittel zum Sichern der drahtlosen Kommunikation kurzer Reichweite in einer Mikrochipkarte (320) der tragbaren Vorrichtung (300ᵢ) enthalten sind.

12. Tragbare Vorrichtung nach einem der Ansprüche 2 bis 10, **dadurch gekennzeichnet, dass** es sich bei dem Titel (Tᵢₖ) um einen Essensgutschein handelt.

## Claims

1. A method for obtaining and using a document (Tᵢₖ) in a portable device (300ᵢ) including:
- a step for receiving secure data (Oᵢ*) from a document issuing device (500);
- a step for storing, in a first secure non-volatile memory (322) of said portable device (300ᵢ), at least one document (Tᵢₖ) obtained from said data;
- a step for selecting at least one document (Tᵢₖ) in said first memory (322);
- a step for combining, in a presentation document (DCᵢₖ), said at least one document (Tᵢₖ) with an image (352) stored in a second non-volatile memory (350) of said portable device (300i);
- a step for displaying said presentation document (DCᵢₖ) on a screen (340) of said portable device (300ᵢ); and
- a step for sending said document (Tᵢₖ) to a third-party device (200), by short-range wireless communication means (310), from said first memory (322), said image (352) not being sent;
the method being **characterized in that** said secure data (Oᵢ*) received from the document issuing device (500) do not include said image (352).

2. A portable device (300i) including:
- means (304) for receiving secure data (Oᵢ*) from a document issuing device (500);
- means (AP300) for storing, in a first secure nonvolatile memory (322) of said portable device (300ᵢ), at least one document (Tᵢₖ) obtained from said data;
- means (AP300) for selecting at least one document (Tᵢₖ) in said first memory (322);
- means (301) for combining, in a presentation document (DCᵢₖ), said at least one document (Tik) with an image (352) stored in a second nonvolatile memory (350) of said portable device (300i),
- means (301) for displaying said presentation document (DCik) on a screen (340) of said portable device (300ᵢ); and
- means (310) for short-range wireless communication capable of sending said document (Tᵢₖ) to a third-party device (200), from said first memory (322), said image (352) not being sent,
the portable device being **characterized in that** said secure data (Oⱼ*), which the receiving means (304) are configured to receive from the document issuing device (500), do not include said image (352).

3. The portable device according to claim 2, including means (301) for selecting said image (352) in said second memory (350), as a function of said document (Tᵢₖ).

4. The portable device according to claim 2 or 3, **characterized in that** said first nonvolatile memory (322) is comprised in a chip card (320) of said portable device.

5. The portable device according to claim 4, **characterized in that** it includes means (AP300) for verifying said secure data (Oᵢ*), said means using a cryptographic key (K11ᵢ).

6. The portable device according to any one of claims 2 to 5, **characterized in that** said second nonvolatile memory (350) is a secure memory.

7. The portable device according to claim 6, **characterized in that** said second nonvolatile memory (350) is comprised in a chip card (320) of said portable device.

8. The portable device according to any one of claims 2 to 7, **characterized in that** said document (Tᵢₖ) includes a unique identifier.

9. The portable device according to any one of claims 2 to 8, **characterized in that** the short-range wireless means (310) are in accordance with the NFC standard.

10. The portable device according to any one of claims 2 to 9, **characterized in that** it includes means (AP300) for securing the short-range wireless communication with a second cryptographic key (K20ᵢ).

11. The portable device according to claim 10, **characterized in that** said means for securing the short-range wireless communication are comprised in a chip card (320) of said portable device (300ᵢ).

12. The portable device according to any one of claims 2 to 10, **characterized in that** said document (Tᵢₖ) is a restaurant voucher.
